# EUROPÄISCHE PATENTANMELDUNG

(11) **EP 4 129 854 A1**
(43) Veröffentlichungstag der Anmeldung: **08.02.2023**
(21) Anmeldenummer: 22187738.4
(22) Anmeldetag: 29.07.2022
(51) Int. Cl.: B65D 77/20

(54) **LEBENSMITTELVERPACKUNG**

(30) Priorität: 03.08.2021 AT 506322021
(71) Anmelder: Maier, Gottfried, 4540 Bad Hall (AT)
(72) Erfinder: Maier, Gottfried, 4540 Bad Hall (AT)
(74) Vertreter: Hübscher & Partner Patentanwälte GmbH

(57) **Zusammenfassung**

Es wird eine Lebensmittelverpackung mit einem aus einem tiefgezogenen Karton gebildeten Behälter, der einen von einem Behältermantel (2) abstehenden, umlaufenden Randflansch (3) aufweist, und mit einem mit dem Behälter versiegelten Deckel (8) beschrieben. Diese Lebensmittelverpackung zeichnet sich durch einen zwischen dem Randflansch (3) und dem Deckel (8) angeordneten, ebenen Kartonrahmen (7) aus, der mit dem Randflansch (3) durch eine entlang des Randflansches (3) umlaufende Klebeschicht (5) gasdicht verbunden und mit dem Deckel (8) versiegelt ist.

## Beschreibung

Die Erfindung bezieht sich auf eine Lebensmittelverpackung mit einem aus einem tiefgezogenen Karton gebildeten Behälter, der einen von einem Behältermantel abstehenden, umlaufenden Randflansch aufweist, und mit einem mit dem Behälter versiegelten Deckel.

Zur Verringerung des Kunststoffanteils ist es bei Lebensmittelverpackungen bekannt, den Behälter aus einem gasdicht versiegelten Karton mit einem vom Behältermantel abstehenden, umlaufenden Randflansch zu fertigen, der dann mit einem Deckel aus Kunststoff, beispielsweise mit einer Kunststofffolie, versiegelt werden kann. Beim üblichen Tiefziehen solcher Behälter aus Karton ergeben sich jedoch Schwierigkeit hinsichtlich einer faltenfreien, für die Versiegelung mit einem Deckel ausreichend stetig durchgehenden Oberfläche des Randflansches, und zwar insbesondere bei Behältern mit einer größeren Tiefe. Der Versuch, diese Schwierigkeiten dadurch zu umgehen, dass der Flansch eines Behälters aus Papier mit einer thermoplastischen Kunststoffschicht eines aus einer Platte gebildeten Zuschnitts laminiert wird, um dann diese thermoplastische Kunststoffschicht mit einer Siegelabdeckung heiß versiegeln zu können (JP 2001328617 A), wird jedoch mit einem zusätzlichen Kunststoffanteil erkauft.

Zur Vermeidung dieser Schwierigkeiten ist es bei Lebensmittelverpackungen außerdem bekannt (WO 2004/033324 A1), an den umlaufenden Flanschrand eines wannenförmigen bzw. schachtelförmigen Kartonbehälters einen Kunststoffrand anzuspritzen, um durch den angespritzten Kunststoffrand einerseits gute Anschlussverhältnisse für einen dichten Deckelabschluss zu schaffen und anderseits eine Versteifung des Kartonbehälters zu erreichen. Zu diesem Zweck ist es möglich, einen Kunststoffstrang in eine umlaufende Nut des abstehenden Flanschrandes eines tiefgezogenen Kartonbehälters zu spritzen, um dann den Deckel mit dem über die Flanschfläche vorstehenden Kunststoffstrang zu versiegeln. Abgesehen davon, dass durch das Anspritzen eines Kunststoffrandes oder eines Kunststoffstranges an den umlaufenden Flanschrand des tiefgezogenen Kartonbehälters der Herstellungsaufwand erhöht wird, wird durch den angespritzten Kunststoffrand nicht nur der Kunststoffanteil vergrößert, sondern auch der Behälter aus Karton wegen des angespritzten Kunstoffs zum Sondermüll.

Zur Versteifung eines tiefgezogenen Behälters einer Lebensmittelverpackung ist es auch bekannt (US 2013/0064998 A1), den umlaufenden Randflansch gegen die Behälterwandung falzartig einzuschlagen und im Bereich der sich dadurch ergebenden Flanschverdoppelung eine umlaufende Nut einzuprägen. Eine solche Maßnahme führt jedoch bei Kartonbehältern zu Faltenbildungen im Flanschbereich, die einer gasdichten Versiegelung des Behälters entgegenstehen.

Der Erfindung liegt somit die Aufgabe zugrunde, eine Lebensmittelverpackung aus einem tiefgezogenen Kartonbehälter und einem mit dem Kartonbehälter versiegelten Deckel so auszugestalten, dass unter Vermeidung eines an den Kartonbehälter angespritzten Kunststoffrandes eine sichere, gasdichte Versiegelung des Kartonbehälters mit einem Deckel gewährleistet werden kann.

Ausgehend von einer Lebensmittelverpackung der eingangs geschilderten Art löst die Erfindung die gestellte Aufgabe durch einen zwischen dem Randflansch und dem Deckel angeordneten, ebenen Kartonrahmen, der mit dem Randflansch durch eine entlang des Kartonrahmens umlaufende Klebeschicht gasdicht verbunden und mit dem Deckel versiegelt ist.

Durch das Vorsehen eines ebenen Kartonrahmens zwischen dem Randflansch und dem Deckel wird die einfache Möglichkeit geschaffen, die beim Tiefziehen des Kartons insbesondere im Eckbereich unvermeidbare Faltenbildung im Bereich des Randflansches auszugleichen, weil der ebene Kartonrahmen durch die entlang des Rahmens umlaufende Klebeschicht auch in einem Faltenbereich gasdicht mit dem Randflansch verbunden werden kann. Der Versiegelung zwischen dem ebenen, faltenfreien Kartonrahmen und dem Deckel stehen dann keine Schwierigkeiten entgegen. Mithilfe der vorgeschlagenen Lösung kann nicht nur der Kunststoffanteil minimiert, sondern auch eine automatische Trennung des durch den Deckel gebildeten Kunststoffanteils vom übrigen Behälter aus Karton beim Abziehen des Deckels vom Behälter erreicht werden.

Wird in weiterer Ausbildung der Erfindung die Klebeschicht in einer umlaufenden Vertiefung des Randflansches vorgesehen, so wird die Klebeschicht mit dem zusätzlichen Vorteil einer verbesserten Dichtwirkung weitgehend verdeckt vom Randflansch aufgenommen. Außerdem bedingt die umlaufende Randflanschvertiefung eine Versteifung des Randflansches.

Bei einer ausreichenden Reißfestigkeit kann der Kartonrahmen mithilfe einer vorstehenden Lasche unter Mitnahme des mit dem Kartonrahmen versiegelten Deckels vom Randflansch des Behälters gelöst werden. Wird jedoch die Lasche zum Abziehen des üblicherweise folienartigen Deckels dem Deckel zugeordnet, so kann die durch die Klebeschicht bestimmte Haftung zwischen dem Randflansch und dem Kartonrahmen kleiner als die durch die Versiegelung bedingte Haftung zwischen dem Kartonrahmen und dem Deckel sein, sodass beim Abziehen des Deckels der Kartonrahmen zusammen mit dem Deckel vom Behälter gelöst wird, und zwar ohne Beschädigungsgefahr für den Behälter.

Weist der Kartonrahmen einwärts gefalzte, den vom Behältermantel abstehenden Randflansch umgreifende Randlaschen auf, so kann in einfacher Art eine erhebliche Versteifung des Randflansches des Behälters erzielt werden, und zwar mit dem Vorteil, dass durch den den Behälterflansch beidseitig umfassenden Kartonrahmen eine Versiegelungsfläche erreicht wird, an die bei einer entsprechenden Abstützung des durch den Kartonrahmen versteiften Behälterflansches ein Deckel auch mit höherem Druck angepresst werden kann, ohne ein Durchdrücken allfälliger Flanschfalten auf die Versiegelungsfläche befürchten zu müssen. Außerdem bedarf es bei einer solchen Einfassung des Randflansches zwischen dem Kartonrahmen und seinen den Randflansch untergreifenden Randlaschen keiner umlaufenden Vertiefung des Randflansches zur Aufnahme der Klebeschicht. Dazu kommt, dass durch das Einschlagen der Randlaschen um den Randflansch der Kartonrahmen gegenüber dem Randflansch ausgerichtet wird, ohne hierfür gesonderte Maßnahmen vorsehen zu müssen.

Um das Einschlagen der Randlaschen zu erleichtern, kann der Kartonrahmen entlang der Falzlinien für die Randlaschen abschnittsweise durchtrennt werden. Durch die dadurch entstehenden Schlitze können auch allfällige Luftbläschen aus der Klebeschicht während des Andrückens des Kartonrahmens an den Randflansch entweichen.

Vorteilhafte Konstruktionsbedingungen werden auch durch ein Zusammensetzen des Kartonrahmens aus zwei Rahmenteilen sichergestellt, weil in diesem Fall der Verschnitt beim Ausstanzen der Zuschnitte für den Kartonrahmen klein gehalten werden kann, insbesondere wenn der Kartonrahmen diagonal geteilt wird.

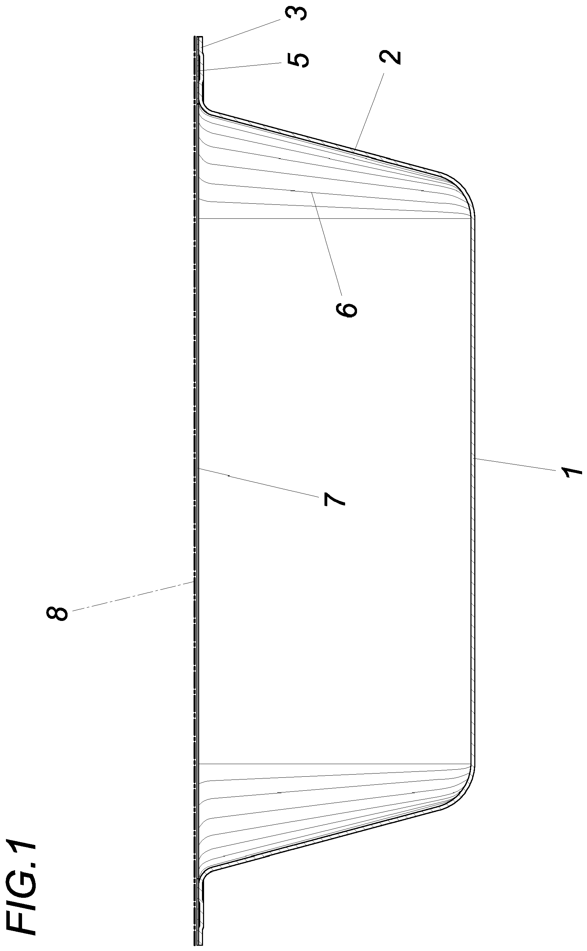

In der Zeichnung ist der Erfindungsgegenstand beispielsweise dargestellt. Es zeigen
- Fig. 1: eine erfindungsgemäße Lebensmittelverpackung in einem schematischen Aufriss,

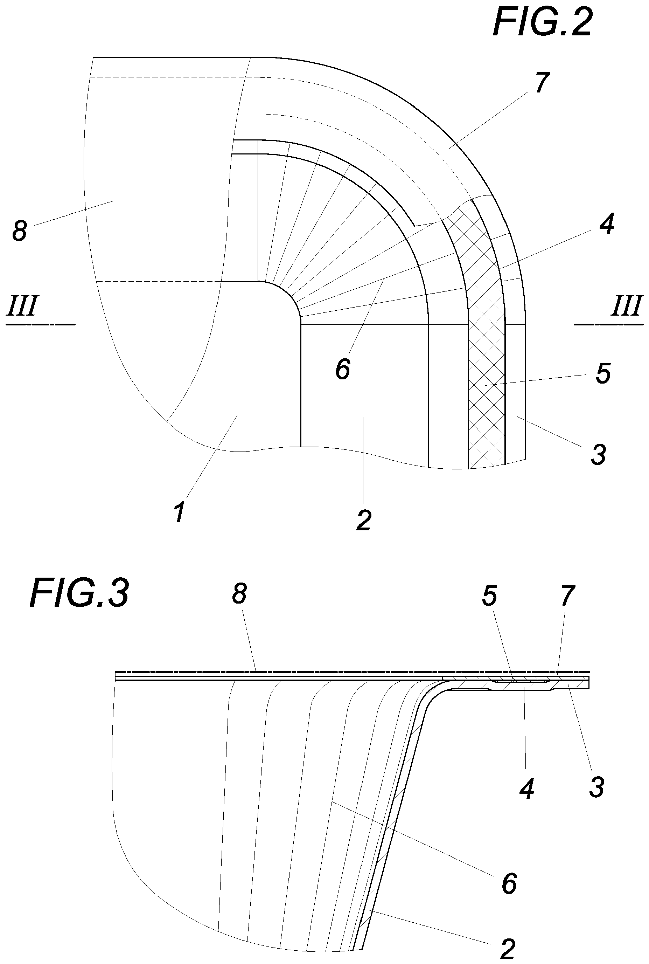

- Fig. 2: diese Lebensmittelverpackung in einer zum Teil aufgerissenen Draufsicht auf einen Eckbereich in einem größeren Maßstab,
- Fig. 3: einen Schnitt nach der Linie III-III der Fig. 2,
- Fig. 4: eine Ausführungsvariante eines Kartonrahmens in einer Draufsicht auf den Zuschnitt für den Kartonrahmen,
- Fig. 5: eine Lebensmittelverpackung mit einem Kartonrahmen gemäß der Fig. 4 in einer zum Teil aufgerissenen Draufsicht auf einen Eckbereich in einem größeren Maßstab und
- Fig. 6: einen Schnitt nach der Linie VI-VI der Fig. 5.

Eine erfindungsgemäße Lebensmittelverpackung weist einen beispielsweise wannenförmigen Behälter aus einem tiefgezogenen Karton mit einem von einem Behälterboden 1 aufragenden Behältermantel 2 auf, von dem ein umlaufender Randflansch 3 nach außen absteht. Der Randflansch 3 ist mit einer umlaufenden Vertiefung 4 zur Aufnahme einer Klebeschicht 5 versehen, was jedoch nicht zwingend ist. Die beim Tiefziehen des Kartons unvermeidbaren Falten sind in der Zeichnung schematisch angedeutet und mit dem Bezugszeichen 6 versehen.

Der Randflansch 3 ist mit einem ebenen Kartonrahmen 7 abgedeckt, der mithilfe der Klebeschicht 5 gasdicht mit dem Randflansch verbunden ist, weil die Klebeschicht 5 die Falten 6 ausgleicht. Auf den ebenen Kartonrahmen 7 kann somit ein Deckel 8 gesiegelt werden, der den Behälter aus Karton gasdicht verschließt. Um die für das Verpackungsgut erforderliche Gasdichtheit zu gewährleisten, kann der Karton sowohl des Behälters als auch des Kartonrahmens 7 in an sich bekannter Art entsprechend imprägniert oder mit einer Beschichtung versehen werden, ohne die Wiederverwertbarkeit des Kartonanteils zu gefährden.

Zum Abziehen des üblicherweise folienartigen Deckels 8 ist dieser bzw. der Kartonrahmen 7 mit einer aus Übersichtlichkeitsgründen nicht dargestellten, über den Randflansch 3 vorstehenden Lasche versehen, mit deren Hilfe der Deckel 8 zusammen mit dem Kartonrahmen 7 vom Randflansch 3 abgehoben werden kann. Die Haftung der Klebeschicht 5 ist zu diesem Zweck vorteilhaft geringer als die durch die Versiegelung des Deckels 8 bedingte Haftung zwischen dem Deckel 8 und dem Kartonrahmen 7. Mit dem Öffnen einer erfindungsgemäßen Lebensmittelverpackung wird daher automatisch der durch den Deckel 8 gebildete Kunststoffanteil vom übrigen Behälteranteil aus Karton getrennt, sodass der Kunststoffanteil einfach getrennt vom Kartonanteil entsorgt werden kann.

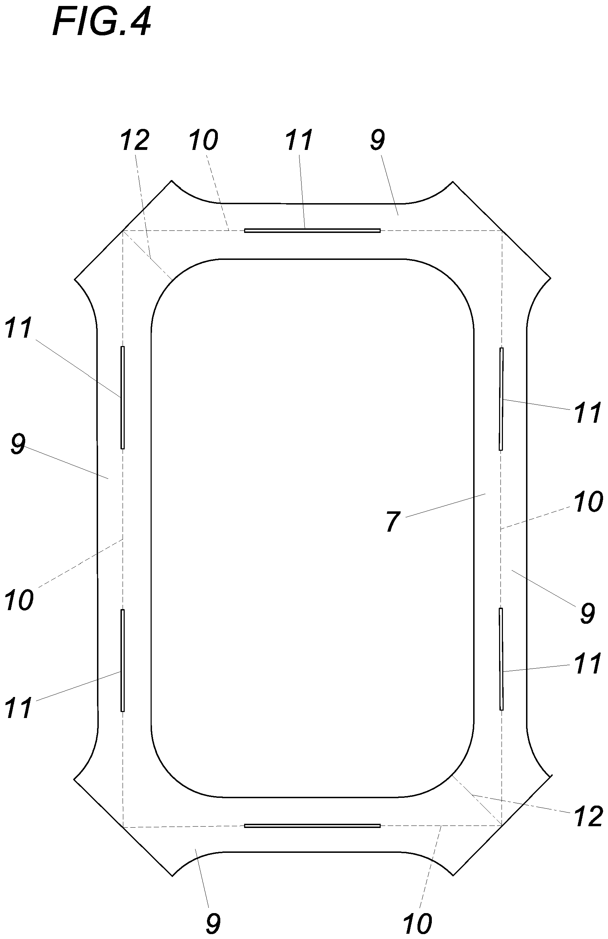

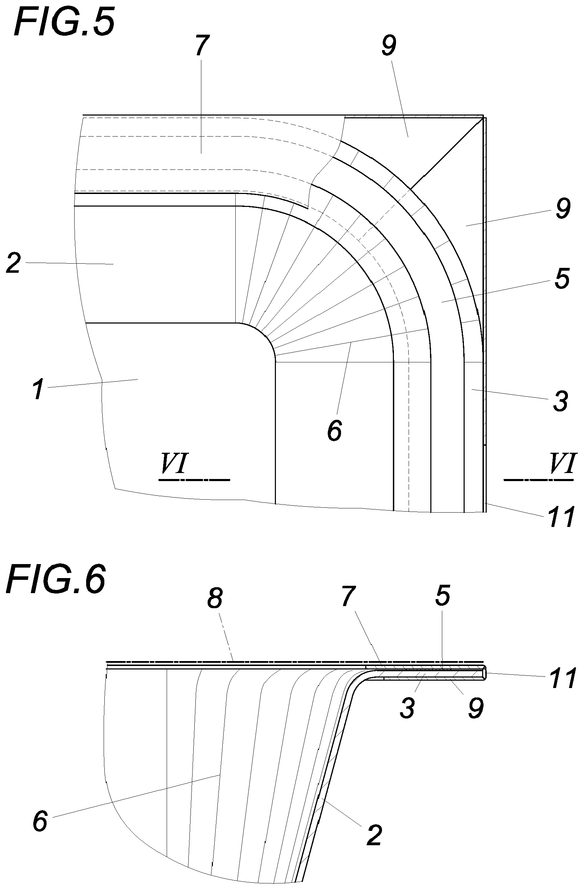

Der Kartonrahmen 7 kann vorteilhaft gemäß der Fig. 4 mit Randlaschen 9 versehen werden, die entlang von Falzlinien 10 um 180° um den abstehenden Randflansch 3 Behältermantels 2 eingeschlagen werden, wie dies insbesondere der Fig.6 entnommen werden kann. Der zwischen dem Kartonrahmen 7 und den eingeschlagenen, einwärts gefalzten Randlaschen 9 des Kartonrahmens 7 eingeklebte Randflansch 3 des Behälters erfährt durch diese Maßnahme nicht nur eine Versteifung, sondern verbessert auch die Voraussetzungen für eine Siegelung des Deckels 8 insbesondere bei einer Massenfertigung, weil bei einer entsprechenden Abstützung des Randflansches 3 der Deckel 8 unter einem entsprechenden Druck an die auch unter dieser Druckbelastung ebene Siegelfläche des Kartonrahmens 7 angedrückt werden kann.

Um das Einschlagen der Randlaschen 9 des Kartonrahmens 7 um die Falzlinien 10 zu erleichtern, kann der Kartonrahmen 7 entlang der Falzlinien 10 abschnittsweise durchtrennt werden, sodass sich entlang der Falzlinien Schlitze 11 ergeben, durch die allfällige Lufteinschlüsse aus der Klebeschicht 5 beim Verkleben des Kartonrahmens 7 mit dem Randflansch 3 des Behälters entweichen können.

Durch das Einschlagen der Randlaschen 9 um den Randflansch 3 des Behälters wird der Kartonrahmen 7 automatisch gegenüber dem Randflansch 3 ausgerichtet, was die Fertigung der Lebensmittelverpackung erleichtert.

Damit die Randlaschen 9 benachbarter Schenkel des Kartonrahmens 7 beim Einschlagen um den Randflansch 3 einander nicht überlappen, bedarf es eines entsprechenden Zuschnitts. Die rechteckigen Außenecken des Kartonrahmens 7 gemäß der Fig. 4 bedingen zu diesem Zweck einen Gehrungsschnitt, wenn die eingeschlagenen Randlaschen 9 benachbarter Rahmenschenkel 9 aneinanderstoßen sollen, was jedoch keineswegs zwingend ist. Die gerundeten Innenecken können durch einen äußeren Randverlauf der Randlaschen 9 berücksichtigt werden, sodass sich ein umlaufend gleichmäßiger Abstand der Randlaschen 9 vom Behältermantel 2 ergibt.

Zur Minimierung des Verschnitts beim Stanzen der Zuschnitte für eine Vielzahl von Kartonrahmen 7 können die Kartonrahmen 7 aus zwei Rahmenteile zusammengesetzt werden, wobei sich eine diagonale Teilung des Kartonrahmens 7 empfiehlt, wie dies in der Fig. 4 durch die strichpunktiert eingezeichneten Trennlinien 12 angedeutet ist.

## Patentansprüche

1. Lebensmittelverpackung mit einem aus einem tiefgezogenen Karton gebildeten Behälter, der einen von einem Behältermantel (2) abstehenden, umlaufenden Randflansch (3) aufweist, und mit einem mit dem Behälter versiegelten Deckel (8), **gekennzeichnet durch** einen zwischen dem Randflansch (3) und dem Deckel (8) angeordneten Kartonrahmen (7), der mit dem Randflansch (3) durch eine entlang des Randflansches (3) umlaufende Klebeschicht (5) gasdicht verbunden und mit dem Deckel (8) versiegelt ist.

2. Lebensmittelverpackung nach Anspruch 1, **dadurch gekennzeichnet, dass** die Klebeschicht (5) in einer umlaufenden Vertiefung (4) des Randflansches (3) vorgesehen ist.

3. Lebensmittelverpackung nach Anspruch 1 oder 2, **dadurch gekennzeichnet, dass** die durch die Klebeschicht (5) bestimmte Haftung zwischen dem Randflansch (3) und dem Kartonrahmen (7) kleiner als die durch die Versiegelung bedingte Haftung zwischen dem Kartonrahmen (7) und dem Deckel (8) ist.

4. Lebensmittelverpackung nach einem der Ansprüche 1 bis 3, **dadurch gekennzeichnet, dass** der Kartonrahmen (7) einwärts gefalzte, den vom Behältermantel (2) abstehenden Randflansch (3) umgreifende Randlaschen (9) aufweist.

5. Lebensmittelverpackung nach Anspruch 4, **dadurch gekennzeichnet, dass** der Kartonrahmen (7) entlang von Falzlinien (10) für die Randlaschen (9) abschnittsweise durchtrennt ist.

6. Lebensmittelverpackung nach einem der Ansprüche 1 bis 5, **dadurch gekennzeichnet, dass** der Kartonrahmen (7) aus zwei Rahmenteilen zusammengesetzt ist.

7. Lebensmittelverpackung nach Anspruch 6, **dadurch gekennzeichnet, dass** der Kartonrahmen (7) diagonal geteilt ist.
